# EUROPÄISCHE PATENTSCHRIFT

(11) **EP 0 843 588 B1**
(45) Veröffentlichungstag und Bekanntmachung des Hinweises auf die Patenterteilung: **17.02.1999**
(21) Anmeldenummer: 95926821.0
(22) Anmeldetag: 11.08.1995
(51) Int. Cl.: B01D 61/18, C02F 1/44, C02F 1/00

(54) **KOMPAKTES, TRAGBARES, HANDBETRIEBENES KLEINFILTER ZUR WASSERAUFBEREITUNG**
COMPACT PORTABLE HAND-OPERATED FILTER FOR PURIFYING WATER
PETIT FILTRE COMPACT PORTABLE, A USAGE MANUEL, POUR LE TRAITEMENT DE L'EAU

(43) Veröffentlichungstag der Anmeldung: 27.05.1998
(73) Patentinhaber: Katadyn Produkte AG, 8304 Wallisellen (CH)
(72) Erfinder: D'AGOSTINO, Adriano, CH-8610 Uster (CH)
(74) Vertreter: Blum, Rudolf Emil Ernst
(86) Internationale Anmeldenummer: CH9500176
(87) Internationale Veröffentlichungsnummer: WO9706878

(56) Entgegenhaltungen:
- US-A- 5 019 252

## Beschreibung

Die Erfindung betrifft ein tragbares, handbetriebenes Kleinfilter zur Wasseraufbereitung gemäss dem Oberbegriff von Anspruch 1.

Tragbare, handbetriebene Kleinfilter sind Geräte, die sich aufgrund ihrer Grösse und ihres Gewichts einfach auf Reisen, Wanderungen und Märsche mitnehmen lassen. Sie weisen in der Regel ein Gehäusevolumen von z.B. einem Liter oder weniger und ein Gewicht von weniger als etwa ein bis zwei Kilogramm auf, so dass sie von einer einzelnen Person ohne weiteres transportiert und bedient werden können.

Bekannte Geräte dieser Art besitzen ein Filter mit einer so gewählten Porengrösse, dass physiologisch gefährliche Bakterien zurückgehalten werden.

Zur Bedienung der Pumpe ist an bekannten Geräten üblicherweise ein T-förmiger Griff angebracht, bei dessen Betätigung das zu reinigende Wasser durch das Filter gedrückt wird. Ein derartiges Gerät, jedoch mit kappenförmigem Griff, wird in US-A-5019252 beschrieben.

Aufgabe der vorliegenden Erfindung ist nun die Bereitstellung eines Filters der eingangs genannten Art, das möglichst kompakt und klein ist, so dass es einfach auf Reisen, Märsche oder dergl. mitgenommen werden kann.

Diese Aufgabe wird vom Kleinfilter gemäss Anspruch 1 erfüllt.

Indem der Handgriff kappenartig ausgeführt ist und in der Ruhestellung einen Teil des Filtergehäuses umschliesst, ergibt sich ein sehr kompakter Aufbau. Dennoch ist die Griff- bzw. Auflagefläche für die Hand relativ gross, so dass der Anwender beim Pumpen nicht ermüdet und keine unangenehmen Druckstellen verspürt.

Eine besonders raumsparende Ausführung wird erreicht, wenn die Filteranordnung bis in den vom Griff umschlossenen Gehäusebereich reicht, so dass der zur Verfügung stehende Raum optimal genutzt wird. Als besonders günstig erweist sich eine Geometrie, bei welcher die Filteranordnung den Pumpzylinder konzentrisch umschliesst.

Dabei kann die Filteranordnung auch zwei achsial hintereinander angeordnete Filterstufen aufweisen, wobei eine Filterstufe im stirnseitigen (d.h. griffseitigen) Gehäusebereich und die zweite Filterstufe im fussseitigen (d.h. dem Griff gegenüber liegenden) Gehäusebereich angeordnet ist. Je nach Anwendung kann der Wasserstrom durch eine oder beide Filterstufen geleitet werden.

Zur Vereinfachung der Handhabung können Griff und Gehäuse Griffflächen bzw. Griffrippen aufweisen, so dass das Gehäuse mit der einen, und der Griff mit der anderen Hand ergriffen werden kann.

Bei einer besonders bequem zu bedienenden Ausführung der Erfindung ist der Ansauganschluss in einem mittleren Bereich des Gehäuses und die Auslassöffnung am Ende des fusseitigen Gehäusebereichs (d.h. auf der dem Griff gegenüber liegenden Seite) angeordnet. Damit kann der austretende Wasserstrahl sicher gelenkt werden.

Wird der Griff mit einer konvexen Stirnfläche versehen, so kann mit dem Handballen beim Pumpen ein grosser Druck erzeugt werden, da die Kraft gleichmässig verteilt wird. Vorzugsweise weist der Griff ferner eine Nase auf, die sich quer zur Bewegungsrichtung erstreckt und ein Herausziehen des Griffs erleichtert.

Weitere Anwendungen, Vorteile und Ausführungen der Erfindung ergeben sich aus der nun folgenden Beschreibung einer bevorzugten Ausführung anhand der Figuren. Dabei zeigen:
Figur 1 eine Seitenansicht einer bevorzugten Ausführung der Erfindung,
Figur 2 eine Ansicht der Vorrichtung nach Figur 1 von oben,
Figur 3 einen Längsschnitt durch die Vorrichtung von Figur 1 und
Figur 4 ein schematisches Blockdiagramm des Wasserlaufs in der Vorrichtung von Figur 1.

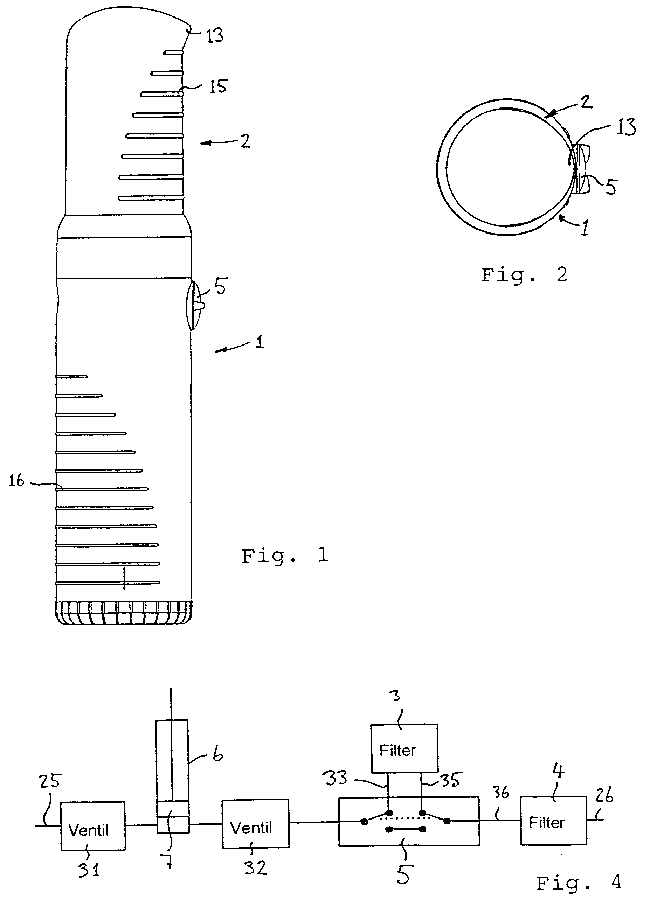

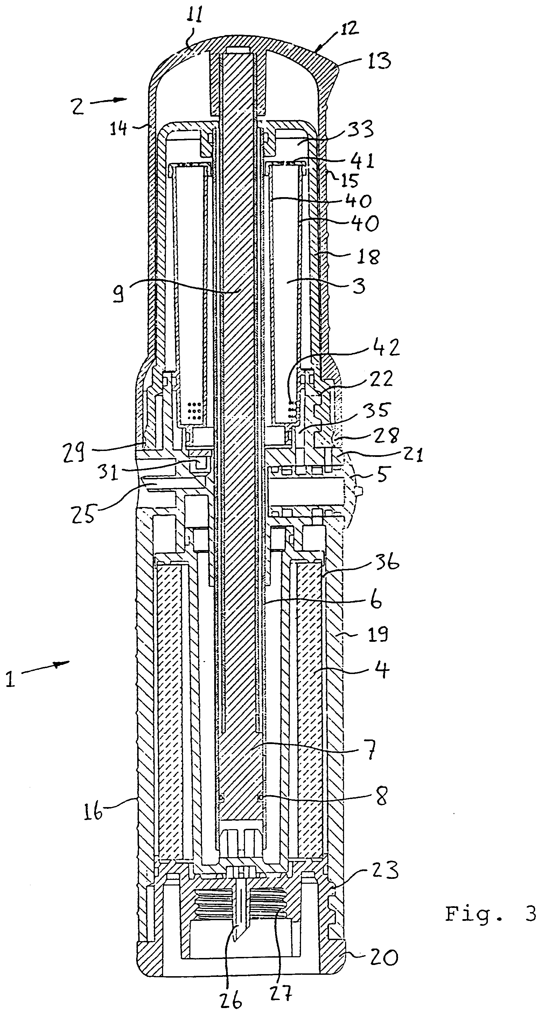

Bei der in den Figuren 1 - 3 gezeigten Ausführung der Erfindung handelt es sich um ein kompaktes Kleinfilter mit einem Gehäuse 1 und einem Griff 2. Im Gehäuse 1 ist eine Filteranordnung mit einem Aktivkohlefilter 3, einem Keramikfilter 4 und einer Umschaltung 5 angeordnet, deren Funktionsweise weiter unten beschrieben wird.

Das Aktivkohlefilter 3 und das zylindrische Keramikfilter 4 sind konzentrisch um je einen Abschnitt eines Pumpzylinders 6 angeordnet, der sich durch die Längsachse des Gehäuses erstreckt. Im Pumpzylinder 6 läuft ein Kolben 7, der mit einem Kolbenring 8 gegen die Zylinderwand abgedichtet ist. Der Kolben 7 ist über eine Kolbenstange 9 mit dem Griff 2 verbunden.

Der Griff 2 ist im wesentlichen becherförmig ausgeführt. Er umfasst eine endseitige Stirnwand 11 mit konvexer Aussenfläche 12, die in eine, auf einer Seite des Griffs hervorstehende Nase 13 übergeht. Ferner besitzt er eine im wesentlichen zylindrische Seitenwand 14. Auf der Aussenseite der Seitenwand 14 sind Griffrippen 15 ausgeformt, welche sich quer zur Längsachse des Geräts erstrecken.

Das Gehäuse 1 ist in einen stirnseitigen Gehäusebereich 18, einen fusseitigen Gehäusebereich 19, 20 und einen dazwischen liegenden Mittelbereich 21 unterteilt. Der stirnseitige Gehäusebereich 18 ist becherförmig, hat einen runden Querschnitt und umschliesst das Aktivkohlefilter 3. Er ist mit einem Bajonettgewinde 22 am Mittelbereich 21 befestigt und kann zur Entnahme des Aktivkohlefilters 3 geöffnet werden. Der fusseitige Gehäusebereich 19, 20 umfasst einen zylindrischen Wandbereich 19 und einen Verschlussdeckel 20. Der Verschlussdeckel 20 ist mit einem Bajonettgewinde 23 im zylindrischen Wandbereich 19 eingeschraubt und kann zur Entnahme des Keramikfilters 4 geöffnet werden. An der Aussenseite des Wandberelchs 19 verlaufen horizontale Griffrippen 16.

Im Mittelbereich 21 des Gehäuses 1 ist seitlich ein Ansauganschluss 25 angeordnet. Er dient zur Befestigung eines Schlauches, durch den das zu reinigende Wasser zugeführt wird. Der Auslass 26 für das gereinigte Wasser befindet sich am Fussende des Geräts. Er ist zurückversetzt in einem Gewinde 27 angeordnet, mit welchem eine genormte Wasserflasche am Gerät befestigt werden kann.

Figur 3 zeigt den Griff 2 in seiner Ruhestellung. In dieser Ruhestellung umschliesst seine Seitenwand 14 den stirnseitigen Gehäusebereich 18. Der Innenquerschnitt des Griffs 2 entspricht im wesentlichen dem Aussenquerschnitt des Gehäusebereichs 18, so dass in der Ruhestellung des Griffs zwischen den beiden Teilen nur ein kleiner Abstand bleibt. Am unteren Ende der Seitenwand 14 des Griffs 2 befindet sich eine Rippe 28, die in eine Nut 29 des Gehäuses eingeschnappt ist.

Im folgenden wird nun die Funktionsweise des Geräts unter Bezug auf die Figuren 3 und 4 beschrieben.

Bei der Anwendung des Geräts wird der Griff wiederholt in Längsrichtung des Gehäuses hin- und herbewegt. Hierzu ergreift der Anwender den Griff 2 mit der ersten und das Gehäuse 1 mit der zweiten Hand. Vorzugsweise ruht der Handballen der ersten Hand auf der konvexen Fläche 12 und die Finger umgreifen die Seitenwand 14.

Beim Herausziehen des Griffs wird über den Ansauganschluss 25 und ein erstes Rückschlagventil 31 Wasser in den Pumpzylinder 6 gesogen. Beim Hineinstossen des Griffs schliesst das erste Rückschlagventil 31 und das Wasser wird durch ein zweites (in Figur 3 nicht sichtbares) Rückschlagventil 32 zum Umschalter 5 gedrängt. Der weitere Weg des Wassers hängt davon ab, in welcher Stellung sich der Umschalter 5 befindet.

Befindet sich der Umschalter 5 in seiner ersten (in Fig. 4 oberen) Stellung, so wird das Wasser durch den Raum 33, das Aktivkohlefilter 3, und Leitung 35 zurück zum Umschalter 5 und von dort über Leitung 36 und Keramikfilter 4 zum Abfluss 26 geleitet. Ist Umschalter 5 in seiner zweiten Stellung, so gelangt das Wasser über Leitung 36 direkt zum Keramikfilter 4 und von dort zum Abfluss 26, ohne dass das Aktivkohlefilter 3 passiert wird.

Somit kann also das Aktivkohlefilter 3 wahlweise vor dem Keramikfilter 4 in den Filterpfad eingeschaltet werden. Dies hat den Vorteil, dass das Aktivkohlefilter 3 nur dann verwendet wird, wenn es wirklich benötigt wird. Damit wird die Lebensdauer dieses Filters erhöht.

Das Aktivkohlefilter 3 dient in erster Linie zur Geschmacksverbesserung und Entchlorung des Wassers. Es besteht vorzugsweise aus einem Aktivkohlegranulat auf Kokosnussschalen-Basis mit einer Granulatgrösse von z.B. 12 - 100 USS, vorzugsweise 30 bis 50 USS und ist in einem Behälter 40 eingeschlossen. Der Behälter 40 weist Ein- und Auslassöffnungen auf, in welchen je ein Filternetz 41 bzw. 42 mit einer Maschenweite von möglichst ca. 10 µm, z.B. 50 µm, angeordnet ist. Mit diesem Filternetz wird verhindert, dass grobe Schwebepartikel ins Aktivkohlegranulat gelangen und dort hängen bleiben. Feinere Partikel werden vom Aktivkohlegranulat nicht aufgehalten und gelangen ins Keramikfilter. Somit wird also eine unnötige Verschmutzung des Aktivkohlegranulats vermieden.

Zur Erneuerung des Filters 3 kann das Aktivkohlegranulat im Behälter 40 ausgetauscht werden, während der Behälter 40 mit den Filternetzen 41, 42 wiederverwendbar ist.

Das Keramikfilter 4 dient, wie bereits erwähnt, zur Rückhaltung von physiologisch schädlichen Bakterien. Es besteht z.B. aus einer Keramik auf der Basis von Diatomeen-Erde und weist eine Porengrösse von z.B. 0.2 µm auf, die genügend klein ist, um den Durchtritt solcher Bakterien zu verhindern.

Die Anordnung des Keramikfilters nach dem Aktivkohlefilter hat den Vorteil, dass allfällige Bakterien aus dem Aktivkohlefilter zurückbehalten werden.

Eine unerwünschte Verschmutzung des Aktivkohlefilters wird durch die relativ grosse Granulatgrösse und die Maschenfilter 41, 42 verhindert. Sehr grobe Schwebstoffe bleiben an den Maschenfiltern hängen, während feinere Schwebstoffe das Aktivkohlegranulat ungehindert passieren und im Keramikfilter 4 aufgefangen werden.

Die in Figur 1 gezeigte Form des Griffs ist nur eine der möglichen Ausführungen der Erfindung. So kann der Griff z.B. auch einen ovalen oder rechteckigen Querschnitt haben. Die Nase 13 kann auf Kosten der Kompaktheit auch grösser gewählt werden oder ganz entfallen. Die Seitenwand 14 braucht nicht geschlossen zu sein, sie kann auch nur einen Teil des Gehäuses seitlich umfassen.

Anstelle des Keramikfilters 4 kann auch ein anderes Filtermaterial zur Rückhaltung von Bakterien verwendet werden. Je nach Anwendung kann auch das Aktivkohlefilter 3 durch einen anderen Filtertyp ersetzt werden.

Während obige Beschreibung eine zur Zeit bevorzugte Ausführung der Erfindung beschreibt, so muss darauf hingewiesen werden, dass die Erfindung nicht darauf beschränkt ist.

## Patentansprüche

1. Portables, handbetriebenes Kleinfilter zur Wasseraufbereitung mit einer Filteranordnung (3, 4) in einem Gehäuse (1) und einer mit einem Griff (2) betätigbaren und im Gehäuse (1) angeordneten Pumpe (6, 7, 8), wobei der Griff kappenförmig mit einer eine Auflagefläche bildenden Stirnwand (11) und einer eine Grifffläche bildenden Seitenwand (14) ausgestaltet ist, dadurch gekennzeichnet, dass der Griff (2) in eine Ruhestellung bringbar ist, in welcher die Seitenwand (14) des Griffs (2) den stirnseitigen Bereich (18) des Gehäuses (1) mindestens teilweise seitlich umschliesst.

2. Kleinfilter nach Anspruch 1, dadurch gekennzeichnet, dass der Griff (2) zur Betätigung der Pumpe entlang einer Längsrichtung des Gehäuses (1) bewegbar ist und dass ein innerer Querschnitt der Seitenwand (14) einem äusseren Querschnitt des stirnseitigen Gehäusebereichs (18) entspricht.

3. Kleinfilter nach Anspruch 2, dadurch gekennzeichnet, dass der stirnseitige Gehäusebereich (18) und die Seitenwand (14) zylindrisch sind.

4. Kleinfilter nach einem der vorangehenden Ansprüche, dadurch gekennzeichnet, dass die Aussenfläche (12) der Stirnwand (11) konvex ist.

5. Kleinfilter nach einem der vorangehenden Ansprüche, dadurch gekennzeichnet, dass mindestens ein Teil der Filteranordnung (3, 4) im stirnseitigen Gehäusebereich (18) angeordnet ist.

6. Kleinfilter nach einem der vorangehenden Ansprüche, dadurch gekennzeichnet, dass die Pumpe (16-18) einen Pumpzylinder (6) und einem durch Betätigung des Griffs im Pumpzylinder verschiebbaren Kolben (7) aufweist, und dass die Filteranordnung (3, 4) mindestens ein konzentrisch um den Pumpzylinder angeordnetes Reinigungsfilter aufweist.

7. Kleinfilter nach Anspruch 6, dadurch gekennzeichnet, dass das Gehäuse einen dem stirnseitigen Gehäusebereich gegenüber liegenden, fusseitigen Gehäusebereich (19, 20) aufweist, wobei ein Teil der Filteranordnung (3, 4) und des Pumpzylinders (6) sich in den fusseitigen Gehäusebereich erstreckt.

8. Kleinfilter nach Anspruch 7, gekennzeichnet durch einen Ansauganschluss (25), der zwischen dem stirnseitigen (18) und dem fusseitigen (19, 20) Gehäusebereich angeordnet ist.

9. Kleinfilter nach einem der Ansprüche 7 oder 8, gekennzeichnet durch eine Auslassöffnung (26), die an einem Ende (20) des fusseitigen Gehäusebereichs angeordnet ist.

10. Kleinfilter nach einem der Ansprüche 7-9, dadurch gekennzeichnet, dass die Filteranordnung (3, 4) zwei Reinigungsfilter aufweist, wobei ein erstes Reinigungsfilter (3) im stirnseitigen Gehäusebereich, und ein zweites Reinigungsfilter (4) im fusseitigen Gehäusebereich angeordnet ist.

11. Kleinfilter nach Anspruch 10, dadurch gekennzeichnet, dass die Filteranordnung einen Umschalter (5) aufweist, mittels dem das Wasser wahlweise durch beide oder nur eines der Reinigungsfilter führbar ist.

12. Kleinfilter nach Anspruch 11, dadurch gekennzeichnet, dass der Umschalter (5) zwischen dem stirnseitigen (18) und dem fusseitigen (19, 20) Gehäusebereich angeordnet ist.

13. Kleinfilter nach einem der Ansprüche 10 bis 12, dadurch gekennzeichnet, dass sowohl der stirnseitige (18), als auch der fusseitige (19, 20) Gehäusebereich zur Entnahme der Reinigungsfilter öffenbar sind.

14. Kleinfilter nach einem der Ansprüche 7 bis 13, dadurch gekennzeichnet, dass an der Seitenwand des Griffs (2) und an einer Aussenwand (19) des fusseitigen Gehäusebereichs Griffrippen (15, 16) angeordnet sind.

15. Kleinfilter nach einem der vorangehenden Ansprüche, dadurch gekennzeichnet, dass der Griff (2) in der Ruhestellung am Gehäuse (1) arretierbar ist.

16. Kleinfilter nach Anspruch 15, gekennzeichnet durch Mittel (28, 29) zum Einschnappen des Griffs (2) am Gehäuse.

17. Kleinfilter nach einem der vorangehenden Ansprüche, dadurch gekennzeichnet, dass der Griff mindestens eine Nase (13) aufweist, welche sich quer zu einer Bewegungsrichtung des Griffs (2) erstreckt.

## Claims

1. Portable, hand operated small filter for purifying water with a filter arrangement (3, 4) in a housing (1) and a pump (6,7,8) operatable by means of a handle (2) and arranged in the housing (1), wherein the handle is substantially cap shaped with a front wall (11) forming a support surface and a lateral wall (14) forming a gripping surface characterised in that the handle (2) can be bought into a rest position in which the lateral wall (14) of the handle (2) encloses the front-end side part of the housing (1) at least partially.

2. Small filter of claim 1 characterised in that the handle (2) can be moved along a longitudinal direction of the housing (1) for operating the pump and that an inner cross section of the lateral wall (14) corresponds to an outer cross section of the front-end part (18) of the housing.

3. Small filter of claim 2, characterised in that the front-end part (18) of the housing and the lateral wall (14) are cylindrical.

4. Small filter of one of the preceding claims characterised in that the outer surface (12) of the front wall (11) is convex.

5. Small filter of one of the preceding claims characterised in that at least a part of the filter arrangement (3, 4) is arranged in the front-end part (18) of the housing.

6. Small filter of one of the preceding claims characterised in that the pump (16-18) comprises a pump cylinder (6) and a piston (7) displaceable in the pump cylinder by operation of the handle, and that the filter arrangement (3,4) comprises at least one purification filter arranged concentrically around the pump cylinder.

7. Small filter of claim 6, characterised in that the housing comprises a foot-end part (19, 20) of the housing lying opposite the front end part of the housing, wherein a part of the filter arrangement (3, 4) and of the pump cylinder (6) extends into the foot-end part of the housing.

8. Small filter of claim 7, characterised by an inlet port (25) arranged between the front-end (18) and foot-end (19, 20) part of the housing.

9. Small filter of one of the claims 7 or 8, characterised by an outlet port (26) arranged at an end (20) of the foot-end part of the housing.

10. Small filter of one of the claims 7 - 9, characterised in that the filter arrangement (3,4) comprises two purification filters, wherein a first purification filter (3) is arranged in the front end part of the housing and a second purification filter (4) is arranged in the foot-end part of the housing.

11. Small filter of claim 10, characterised in that the filter arrangement comprises a switch (5), by means of which the water can be led selectively through both or only one of the purification filters.

12. Small filter of claim 11, characterised in that the switch (5) is arranged between the front-end (18) and the foot-end (19, 20) part of the housing.

13. Small filter of one of the claims 10 to 12, characterised in that the front-end (18) as well as the foot-end (19, 20) part of the housing can be opened for removal of the purification filters.

14. Small filter of one of the claims 7 to 13, characterised in that gripping ribs (15, 16) are arranged on the lateral wall of the handle (2) and on an outer wall (19) of the foot-end part of the housing.

15. Small filter of one of the preceding claims, characterised in that the handle (2) can be locked against the housing (1) in the rest position.

16. Small filter of claim 15, characterized by means (28, 29) for snapping the handle (2) into the housing.

17. Small filter of one of the preceding claims, characterised in that the grip comprises at least one nose (13) extending transversally to a direction of movement of the handle (2).

## Revendications

1. Filtre portable à faible encombrement et à actionnement manuel pour la régéneration de l'eau, avec un ensemble filtrant (3, 4) dans un boîtier (1) et avec une pompe (6, 7, 8) disposée dans le boitier et pouvant être actionnée par une poignée (2) en forme de coupole présentant une surface d'appui sur sa face frontale (11), ainsi qu'une paroi latérale (14) dont la face forme une poignée, caractérisé en ce que la poignée (2) peut être amenée en une position de repos en laquelle sa paroi latérale (14) entoure latéralement et au moins partiellement le domain frontal (18) du boîtier (1).

2. Filtre de faible encombrement selon la revendication 1, caractérisé en ce que pour son actionnement la poignée (2) est mobile en direction longitudinale du boîtier (1) et qu'une section intérieure de la paroi latérale (14) correspond à une section extérieure de la partie frontale (18) du boîtier.

3. Filtre de faible encombrement selon la revendication 2, caractérisé en ce que la partie frontale (18) du boîtier et la paroi latérale (14) sont cylindriques.

4. Filtre de faible encombrement selon une des revendications précédentes, caractérisé en ce que la surface extérieure (12) de la face frontale (11) est convexe.

5. Filtre de faible encombrement selon une des revendications précédentes, caractérisé en ce qu'au moins une partie de l'ensemble filtrant (3, 4) est agencée dans le domaine frontal (18) du boîtier.

6. Filtre de faible encombrement selon une des revendications précédentes, caractérisé en ce que la pompe (16 - 18) comporte un cylindre de pompe (6) et un piston (7) pouvant être déplacé dans celui-ci par actionnement de la poignée, et en ce que l'ensemble filtrant (3, 4) comprend au moins un filtre d'épuration disposé concentriquement autour du cylindre de pompe.

7. Filtre de faible encombrement selon la revendication 6, caractérisé en ce que le boîtier comporte une région inférieure (19, 20) située à l'opposé du domaine frontal, une partie de l'ensemble filtrant (3, 4) ainsi que du cylindre de pompe (6) s'étendant dans cette région inférieure.

8. Filtre de faible encombrement selon la revendication 7, caractérisé par une prise d'aspiration (25) agencée entre le domaine frontal (18) et la région inférieure (19, 20) du boîtier.

9. Filtre de faible encombrement selon une des revendications 7 ou 8, caractérisé par une prise de refoulement (26) disposée à une extrémité (20) de la région inférieure du boîtier.

10. Filtre de faible encombrement selon une des revendications 7 à 9, caractérisé en ce que l'ensemble filtrant (3, 4) comprend deux filtres d'épuration dont le premier (3) se trouve dans le domaine frontal et le second (4) se trouve dans la région inférieure du boîtier.

11. Filtre de faible encombrement selon la revendication 10, caractérisé en ce que l'ensemble filtrant comporte un commutateur (5) permettant de diriger l'eau de façon sélective soit à travers un seul soit à travers les deux filtres.

12. Filtre de faible encombrement selon la revendication 11, caractérisé en ce que le commutateur (5) est disposé entre le domaine frontal (18) et la région inférieure (19, 20) du boîtier.

13. Filtre de faible encombrement selon une des revendications 10 à 12, caractérisé en ce que le domaine frontal (18) aussi bien que la région inférieure (19, 20) du boitier peuvent être ouverts pour en extraire les filtres d'épuration.

14. Filtre de faible encombrement selon une des revendications 7 à 13, caractérisé par l'existence de nervures antidérapantes (15, 16) sur la paroi latérale de la poignée (2) et sur une paroi extérieure (19) de la région inférieure du boîtier.

15. Filtre de faible encombrement selon une des revendications précédentes, caractérisé en ce qu'en position de repos la poignée (2) peut être arrêtée sur le boîtier (1).

16. Filtre de faible encombrement selon la revendication 15, caractérisé en ce qu'il comporte des moyens (28, 29) pour encliqueter la poignée (2) sur le boîtier.

17. Filtre de faible encombrement selon une des revendications précédentes, caractérisé en ce que la poignée comporte au moins une protubérance (13) s'étendant transversalement à la direction d'un mouvement de la poignée (2).
